# EUROPEAN PATENT SPECIFICATION

(11) **EP 0 612 305 B1**
(45) Date of publication and mention of the grant of the patent: **14.02.1996**
(21) Application number: 92924072.9
(22) Date of filing: 11.11.1992
(51) Int. Cl.: C02F 1/42, B01J 49/00

(54) **METHOD RELATING TO THE FLUSHING OF A PURIFICATION PLANT**
METHODE ZUM SPÜLEN EINER REINIGUNGSANLAGE
PROCEDE DE RINCAGE PAR COURANT D'EAU DESTINE A UNE INSTALLATION D'EPURATION

(30) Priority: 14.11.1991 SE 9103373; 11.02.1992 SE 9200386
(43) Date of publication of application: 31.08.1994
(73) Proprietor: SPARRMAN, Jan-Olov, S-252 24 Helsingborg (SE)
(72) Inventor: SPARRMAN, Jan-Olov, S-252 24 Helsingborg (SE)
(74) Representative: Hynell, Magnus
(86) International application number: SE9200774
(87) International publication number: WO9310050

(56) References cited:
- DE-A- 1 814 749
- DERWENT'S ABSTRACT, No. 91-108793/15, week 9115; & SU,A,1587014 (TASHK VODGEO HYDROG), 23 August 1990 (23.08.90).
- PATENT ABSTRACTS OF JAPAN, Vol. 13, No. 328, C-621; & JP,A,01 107 850 (NIPPON ATOM IND GROUP CO LTD), 25 April 1989 (25.04.89).
- DERWENT'S ABSTRACT, No. 89-240493/33, week 8933; & SU,A,1459707 (ATMOS WATER PROTECT), 23February 1989(23.3.89)

## Description

### TECHNICAL FIELD

The present invention relates to a method of flushing a purification plant of a kind which for removal of certain metals in sewage water comprises at least one prefilter and at least one ion exchange column connected to the prefilter in series. The invention relates especially to a procedure in which the plant is flushed the silver in the rinsing water from x-ray and other photographic laboratories is taken care of. The applicability of the procedure is however not limited to this application only, but can also be used to remove and take care of other dissolved valuable and/or harmful compounds in sewage liquids. The invention also relates to plants in which the procedure may be accomplished.

### BACKGROUND OF THE INVENTION

Rinsing water from x-ray laboratories and other phototechnical laboratories contains large amounts of silver. To remove the silver from the rinsing water, plants of the type mentioned in the preamble are used. The prefilter may contain a filter mass composed of sand, activated carbon, zeolites or similar, and in the ion exchange column there is an ion exchange mass to which metals can bind. The ion exchange mass can be constituted of an anionic or a cationic exchange mass type or constitute a combination of the two ion exchange mass types.

These plants are doing well under normal operation, by which they can satisfy present requirements, which prescribes that water going to the outlet may contain maximum 1.0 mg silver/ℓ water. By flushing the plant, considerable amounts of silver is released however, from both prefilter and ion exchange column, which goes directly to the outlet. This dumping have so far been neglected, notwhitstanding that it implies a non-negligible environmental pollution, and estimations indicate that in this manner as much as 30% of all silver in the rinsing water goes to outlet, which is a serious problem.

### BRIEF DISCLOSURE OF INVENTION

A first purpose of the invention is to eliminate the above mentioned problem. A purpose of the invention is also to offer a procedure, of which basic principles may be utilized by flushing purification plants when taking care of other metals than silver.

One more purpose of the invention is to offer a procedure which does not require an equipment that is too expensive, but which can be made as compact as to fit within a limited space. A further purpose of the invention is that the procedure could be automated and controlled by the use of sensors and a computer.

These purposes and others will be achieved herein that the invention is characterized by the appending claims.

Further advantages and aspects of the invention will be evident in the following description of a preferred embodiment.

### BRIEF DESCRIPTION OF DRAWINGS

In the following description of a preferred embodiment, reference will be made to the accompanying drawings, in which
Fig. 1 shows a scheme over a purification plant according to the preferred embodiment, and
Fig. 2-7 show flowcharts over parts of the plant which are effected under different phases of the procedure.

### DESCRIPTION OF A PREFERRED EMBODIMENT

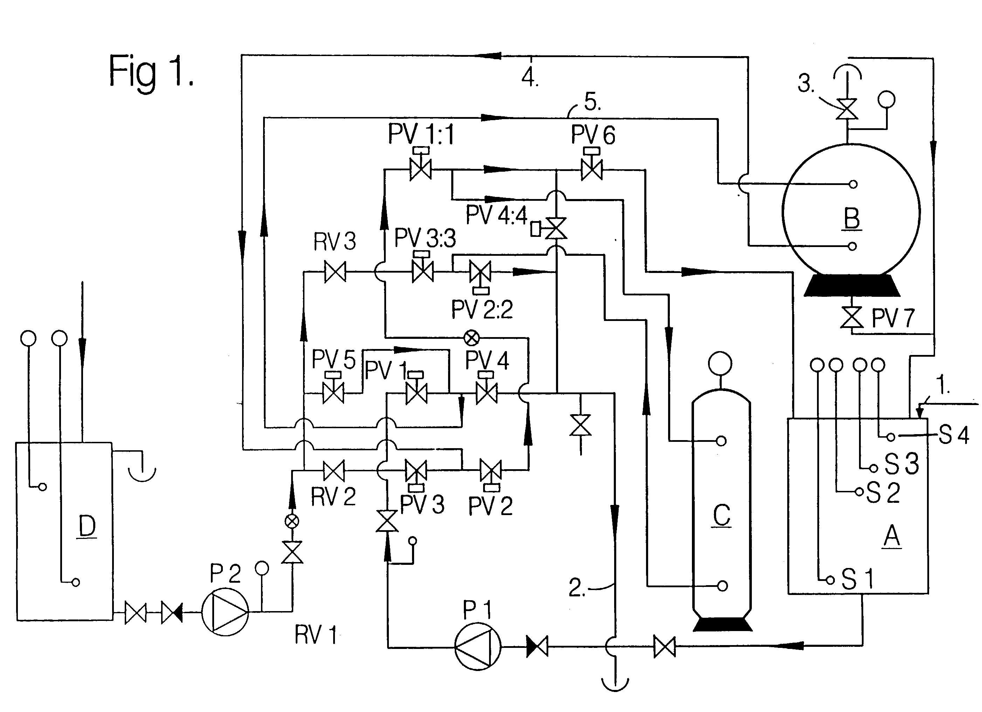

The plant shown in Fig. 1 contains, in a conventional way, a prefilter B and an ion exchange column C connected in series. A storage tank for contaminated liquids is designated A. A pump P1 is arranged to pump contaminated liquid from tank A, and a pump P2 with larger capacity than the pump P1 is arranged to pump pure water from the pure water tank D. Further there is a large number of cut-off valves PV1, PV2, PV3, PV4, PV5, PV6, PV7, PV1:1, PV2:2, PV3:3 and PV4:4 which makes it possible to choose between flowpaths, and three valves RV1, RV2 and RV3 which can be adjusted to give certain fixed flows. In the storage tank A sensors S1, S2, S3 and S4 are provided on different levels, of which S1 is intended to settle the lowest level in tank A, S2 settles the highest level in the tank, S3 releases alarm to indicate risk for overfilling the tank while S4 is arranged to release the plant's emergency shut down.

An inlet pipe to the tank A for rinsing fluid that shall be purified is designated 1, and a sewer for purified liquid to outlet is designated 2. A vacuum valve 3 is arranged on the prefilter B designed to be released to let air into the filtertank when draining the prefilter B. How other pipes go and how they are connected is evident from the diagram of connections and from the following description.

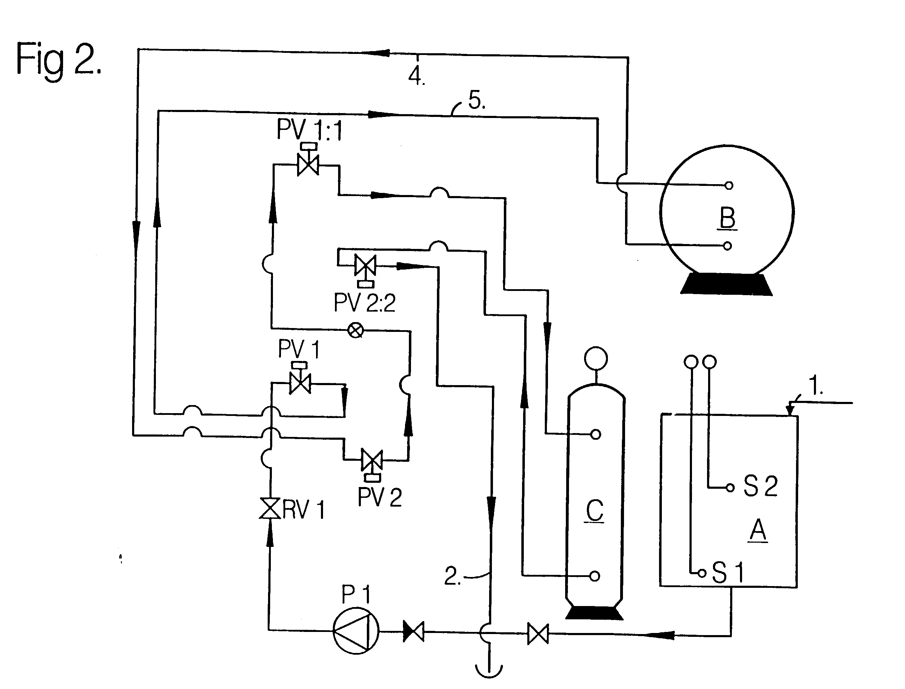

Under normal operation - Fig. 2 - the rinsing water is directed from the phototechnical laboratory or other source of contamination through pipe 1 to storage tank A, which functions as a buffer in the process. From tank A water is sucked by means of pump P1, with a certain flow which is controlled by the preset valve RV1, and via the valve PV1 which is open during this phase and pipe 5 to the prefilter B. This works as a pressure filter. The liquid is pressed through the filter, which mainly captures particle impurities in the liquid. The liquid is subsequently pressed out through the pipe 4 via the open valves PV2 and PV1:1 to the ion exchange column C which contains an ion exchange mass, which may be conventional. The liquid flows down the ion exchange mass, which will capture the silver in the liquid. The purified water is directed via the open valve PV2:2 and the sewer 2 to outlet. The other cut-off valves in the system are closed during this phase.

Cleaning the filters, i.e. cleaning the prefilter B and the ion exchange column C, is preferably carried out when the activity in the phototechnical laboratory or similar and the generation of flushing liquids is reduced to a minimum, normally by night. Before the purification begins, the tank A is thus emptied down to the lower sensor S1. The moment for the purification of the filters to take place may be decided either by the registration of a certain level of pressure difference over the filters, indicating that they are silted up with impurities to a certain predetermined level, or according to a certain predetermined timetable. Both these alternatives may be programmed into the computer controlling the whole process.

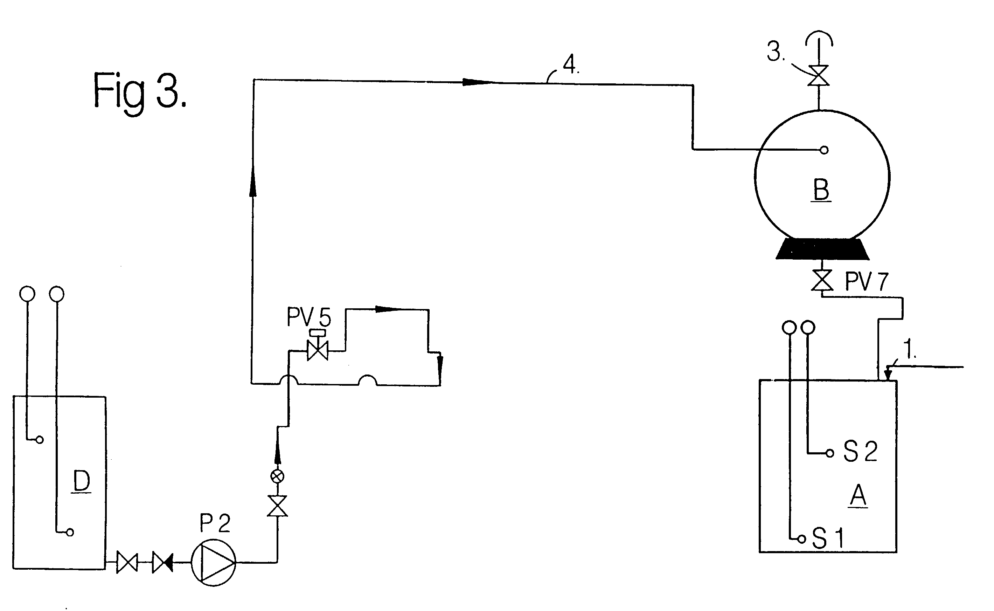

Thus, when the computer registers that the filters should be cleaned, the purification process begins and the prefilter B is drained. The vacuum valve 3 and the valve PV7 are opened and the liquid in the prefilter B is directed into the storage tank A, Fig. 3. Subsequently, the vacuum valve 3 and the valve PV7 are closed. Instead, valve PV5 is opened and pump P2 fills the prefilter B with fresh water through pipe 4. Thus, when the prefilter B is filled, the vacuum valve 3 and the valve PV7 in the drainage pipe open again, and the filter is flushed with the pure water. The silver in the filter B goes along with the water, and thus the contaminated flushing water is collected in tank A. This procedure, comprising filling the prefilter tank followed by subsequent draining is repeated 2 to 4 times. The tank A is given a sufficient volume to accumulate the flushing water which is drained through the prefilter B.

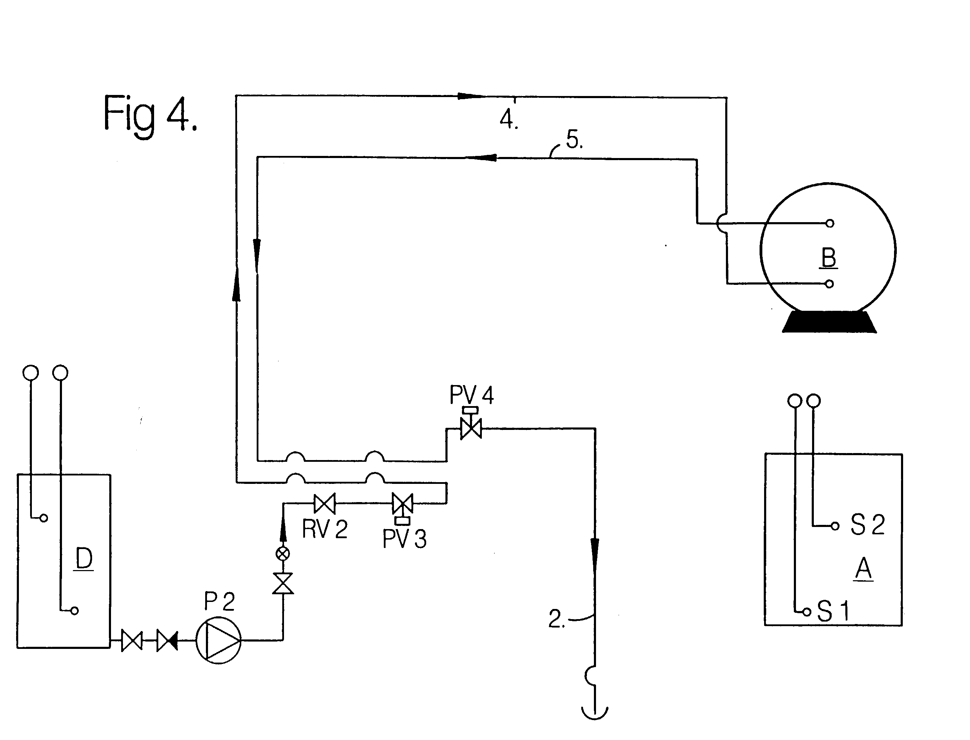

The prefilter B is now clean as concerns silver compounds but contains other impurities of less harmful character, which will lower the purification ability of the filter. These impurities will now be removed to restore the prefilter B. For this purpose the shut-off valves PV3 and PV4 are opened, and the pump P2 forcefully pumps pure water via the preset valve RV2 and the pipe 4 into the lower part of the prefilter B - Fig. 4 - wherein the flow is controlled by the setting of valve RV2. The filter mass in the prefilter B is agitated so that larger solid impurities may be removed as well. These harmless impurities goes along with the flushing water through the pipe 5 and the valve PV4 and the sewer 2 to outlet. It should in connection herewith be noted that this water does not contain silver in a proportion reaching up to the acceptable maximum level, since the prefilter B has been flushed with pure water several times in the previous phase, Fig. 3, after which the water contaminated with silver temporarily is contained in the tank A.

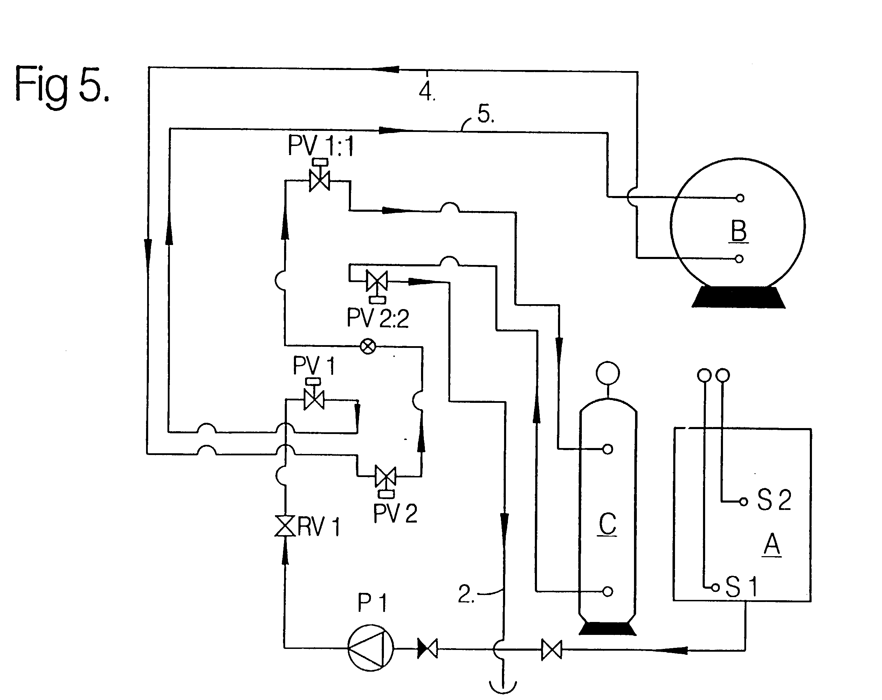

The water in the tank A must be purified before it may be directed to outlet. For this purpose the system is connected according to Fig. 5. The valves shown in this diagram are opened, while all other shut-off valves are closed. The pump P1 sucks the liquid out of the tank A, which liquid is directed via the valves RV1 and PV1 and the pipe 5 back to and through the prefilter B. From the prefilter B the water is directed in the same way as during normal purification, Fig. 2, to the ion exchange column C where the silver is received on the ion exchange mass. Thus, the purified flushing water may thereafter be directed via the valves PV2 and PV2:2 and the outlet valve 2 to outlet.

The next measure is to purify the ion exchange mass as well. This purification of the prefilter, takes place in two steps, wherein a first step there is removed a main part of the silver existing in the ion exchange mass, but which is not fixed thereto, while in the next step harmless impurities are removed from the ion exchange column.

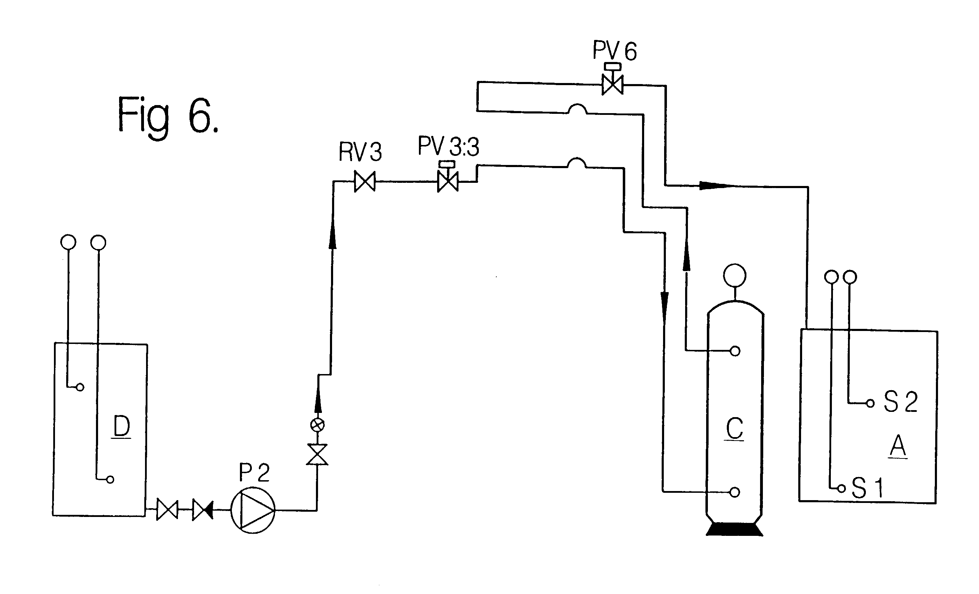

When the ion exchange column shall be purified as far as silver present in the ion exchange mass is concemed, but which is not fixed thereto, the system is coupled according to Fig. 6. Pure water is backwashed during short periods in intervals from tank D by means of pump P2 via the preset valve RV3 and the opened shut-off valve PV3:3 into the lower part of the ion exchange column C. Each such period has a duration of approx. 10 s. The non-fixed silver mainly exists in the top portion of the ion exchange column and is forced out of the column via valve PV6 to storage tank A. All other valves in the system are closed. Between each such period, the entire plant stands still for 1 - 5 minutes, so that the ion exchange mass has time to settle before the shock. This procedure is repeated 4 - 5 times, whereafter the ion exchange column is essentially free from silver not fixed to the ion exchange mass. Instead of backwashing periodically through the ion exchange column C, the water can as an alternative be directed via an additional, not shown preadjustment valve, which will give such a low flow rate to the backwashing water, that the silver can be removed without considerably stirring the ion exchange mass.

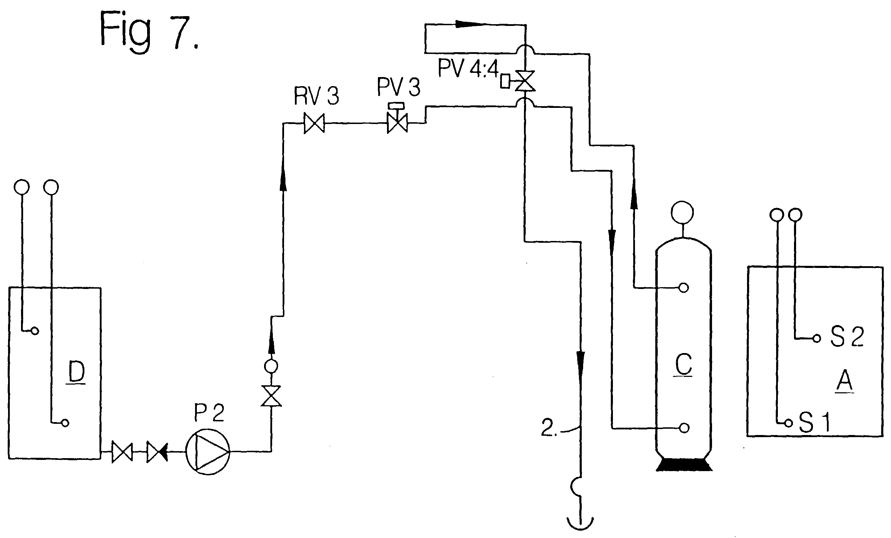

Thus, when the ion exchange mass in the column C is essentially free from non-fixed silver, the ion exchange mass is backwashed during a long period of time or with a powerful flow of pure water so that the entire bedding is stirred up, wherein remaining, mainly undissolved harmless impurities are removed and directed to outlet. During this phase, connection diagram according to Fig. 7 is applicable, wherein liquid leaving the ion exchange column C instead of going to tank A, as in the previous step, is directed to outlet via the now opened valve PV4:4, Fig. 7. During the last mentioned step, Fig. 7, the flushing water contaminated with silver remains in the storage tank A, i.e. the liquid accumulated during the first step of purification of the ion exchange column C.

Eventually the liquid is directed from tank A through the prefilter B and the ion exchange column C to outlet in the same manner as previously described with reference to Fig. 5.

The entire plant is now reconditioned and the tank A is emptied to the level of the lower sensor S1, whereupon the plant may be taken into normal operation again, as has been described with reference to Fig. 2.

When the ion exchange mass is saturated with silver, it is replaced by new ion exchange mass or regenerated ion exchange mass, while the saturated ion exchange mass is regenerated to recover the accumulated silver, using methods which do not constitute part of this invention.

It should be understood that the sought patent protection is not limited to the detailed procedure described above, but that the invention can be varied within the scope of the invention. E.g., it is possible to make the storage tank A larger, in which silver contaminated flushing water may be accumulated from prefilter B as well as from ion exchange column C. In this case, the phase of purification which has been described with reference to Fig. 5 can be postponed and carried out as a final procedure.

## Claims

1. Procedure for the flushing of a purification plant of a kind which for removal of certain metals, preferably silver, in sewage water, comprises at least one pre-filter (B), and at least one ion exchange column (C) connected to the pre-filter in series, **characterized** in that the pre-filter and the ion exchange column are separately flushed with clean water, that the contaminated flushing water is collected in a container (A), and that the collected flushing water is caused to pass through the pre-filter (B) and the ion exchange column (C), prior to feeding it to outlet.

2. Procedure according to claim 1, **characterized** in that when cleaning the pre-filter and ion exchange column, said pre-filter and said ion exchange column are first purified as far as said certain metals are concerned, that the flushing water which thus has been contaminated with said metals is collected in said container, and that thereafter at least the main part of remaining contaminations in the pre-filter and in the ion exchange column are removed and led to outlet, before the flushing water collected in the container is caused to pass through the pre-filter and through the ion exchange column, whereafter even this flushing water is led to outlet.

3. Procedure according to claim 2, **characterized** in that the pre-filter is first cleaned with reference to the said metals, that the flushing water containing the metals is collected in said container, that the pre-filter thereafter is cleaned with reference to remaining contaminations, that the liquid collected in the container thereafter is led back through the pre-filter and further through the ion exchange column, before it is led to outlet, that the ion exchange column thereafter is cleaned with reference to said certain metals, that the flushing water together with said metals are led to said container, that the ion exchange column is cleaned with reference to remaining contaminations which are led to outlet together with the flushing water, and that thereafter the liquid contained in said container, containing said certain metals from the ion exchange column is led to and through the pre-filter and from there to and through the ion exchange column before it is led to outlet.

## Patentansprüche

1. Verfahren zum Spülen einer Reinigungsanlage einer Art, welche zum Ausscheiden von bestimmten Metallen, bevorzugt Silber aus Abwasser, wenigstens einen Vorfilter (B) und wenigstens einen Ionenaustauschstab (C) aufweist, welcher mit dem Vorfilter in Reihe verbunden ist,
dadurch gekennzeichnet,
dass der Vorfilter und der Ionenaustauschstab separat mit sauberem Wasser gespült werden, dass das verunreinigte Spülwasser in einem Behälter (A) gesammelt wird und dass das gesammelte Spülwasser durch den Vorfilter (B) und den Ionenaustauschstab (C) geleitet wird, bevor es zu einem Auslass geführt wird.

2. Verfahren nach Anspruch 1, dadurch gekennzeichnet, dass, wenn der Vorfilter und der Ionenaustauschstab gereinigt werden, dieser Vorfilter und dieser Ionenaustauschstab zuerst gereinigt werden, was die bestimmten Metalle anbelangt, dass das Spülwasser, welches somit mit diesen Metallen verunreinigt ist, in diesem Behälter gesammelt wird und dass danach wenigstens der Hauptanteil an übrig bleibenden Verunreinigungen in dem Vorfilter und am Ionenaustauschstab entfernt und zum Auslass geführt wird, bevor das Spülwasser, das in dem Behälter gesammelt wurde, durch den Vorfilter und durch den Ionenaustauschstab geführt wird, wonach auch dieses Spülwasser dem Auslass zugeführt wird.

3. Verfahren nach Anspruch 2, dadurch gekennzeichnet, dass der Vorfilter zuerst von den Metallen gereinigt wird, dass das Spülwasser, welches die Metalle aufweist, in dem Behälter gesammelt wird, dass der Vorfilter danach im Bezug auf die übrig gebliebenen Verunreinigung gereinigt wird, dass die Flüssigkeit, welche in dem Behälter gesammelt wurde, danach durch den Vorfilter und ferner durch den Ionenaustauschstab zurückgeführt wird, bevor sie zum Auslass geführt wird, dass der Ionenaustauschstab danach von diesen bestimmten Metallen gereinigt wird, dass das Spülwasser zusammen mit den Metallen zu dem Behälter geführt wird, dass der Ionenaustauschstab von verbleibenden Verunreinigungen gereinigt wird, welche zusammen mit dem Spülwasser zu dem Auslass geführt werden, und dass danach die in dem Behälter verbliebene Flüssigkeit, welche die bestimmten Metalle von dem Ionenaustauschstab enthält, zu und durch den Vorfilter und von dort zu und durch den Ionenaustauschstab geführt wird, bevor sie zu dem Auslass geführt wird.

## Revendications

1. Procédé pour la purge d'une usine de purification destinée à l'élimination de certains métaux, de préférence l'argent, à partir d'eaux résiduaires, laquelle comprend au moins un pré-filtre (B) et au moins une colonne échangeuse d'ions (C) connecté en série au pré-filtre, caractérisé en ce que le pré-filtre et la colonne échangeuse d'ions sont purgés séparément avec de l'eau pure, en ce que l'eau de purge contaminée est recueillie dans un récipient (A) et en ce qu'on fait passer l'eau de purge recueillie, à travers le pré-filtre (B) et la colonne échangeuse d'ions (C) avant de la diriger vers la sortie.

2. Procédé selon la revendication 1, caractérisé en ce que de façon à nettoyer le pré-filtre et la colonne échangeuse d'ions, ledit pré-filtre et ladite colonne échangeuse d'ions sont tout d'abord débarassés desdits certains métaux, en ce que l'eau de purge ainsi contaminée par lesdits métaux est recueillie dans ledit récipient, et en ce que par la suite au moins la plus grande partie des contaminants restants dans le pré-filtre et la colonne échangeuse d'ions sont éliminés et dirigés vers la sortie avant de faire passer l'eau de purge recueillie dans le récipient à travers le pré-filtre et la colonne échangeuse d'ions, après quoi même l'eau de purge est dirigée vers la sortie.

3. Procédé selon la revendication 2, caractérisé en ce que le pré-filtre est d'abord débarassé desdits métaux, en ce que l'eau de purge contenant les métaux est recueillie dans ledit récipient, en ce que le pré-filtre est par la suite débarassé des contaminants restants, en ce que le liquide recueilli dans le récipient est par la suite renvoyé à nouveau à travers le pré-filtre puis à travers la colonne échangeuse d'ions, avant d'être dirigé vers la sortie, en ce que la colonne échangeuse d'ions est par la suite débarassée desdits certains métaux, en ce que l'eau de purge ensemble avec lesdits métaux est dirigée vers ledit récipient, en ce que la colonne échangeuse d'ion est débarassée des contaminants restants qui sont dirigés vers la sortie ensemble avec l'eau de purge, et en ce que par la suite le liquide contenu dans ledit récipient, contenant lesdits certains métaux provenant de la colonne échangeuse d'ions est dirigé vers et à travers le pré-filtre et de là vers et à travers la colonne échangeuse d'ions avant d'être dirigé vers la sortie.
